# EUROPÄISCHE PATENTSCHRIFT

(11) **EP 2 752 036 B1**
(45) Veröffentlichungstag und Bekanntmachung des Hinweises auf die Patenterteilung: **03.03.2021**
(21) Anmeldenummer: 12745628.3
(22) Anmeldetag: 27.07.2012
(51) Int. Cl.: H04W 4/48, H04W 4/029

(54) **KRAFTFAHRZEUG**
MOTOR VEHICLE
VÉHICULE À MOTEUR

(30) Priorität: 02.09.2011 DE 102011112370
(43) Veröffentlichungstag der Anmeldung: 09.07.2014
(73) Patentinhaber: Audi AG, 85045 Ingolstadt (DE)
(72) Erfinder: SIEGEL, Andreas, 85049 Ingolstadt (DE); REICHEL, Michael, 85049 Ingolstadt (DE)
(74) Vertreter: Brandt, Kai
(86) Internationale Anmeldenummer: PCT/EP2012/003203
(87) Internationale Veröffentlichungsnummer: WO 2013/029726

(56) Entgegenhaltungen:
- DE-A1-102004 005 152
- DE-A1-102008 028 844
- US-A1- 2011 137 520
- US-A1- 2011 183 601
- "Human Factors (HF); Intelligent Transport Systems (ITS); ICT in cars", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. HF, Nr. V1.1.1, 1. April 2010 (2010-04-01), XP014046275,

## Beschreibung

Die Erfindung betrifft ein Kraftfahrzeug.

Es ist bekannt, mobile Endgeräte über eine Kommunikationsverbindung mit einem Kraftfahrzeug zu verbinden. So können, beispielsweise durch eine bestehende Datenverbindung zwischen einem Mobiltelefon und einem Fahrzeugsystem in Form eines Kommunikationssystems, Telefongespräche über die kraftfahrzeuginnenraumseitig vorgesehenen Lautsprecher und ein kraftfahrzeuginnenraumseitig vorgesehenes Mikrofon nach Art einer Freisprechanlage geführt werden

Der Stand der Technik wird in US 2011/137520 A1, und DE 10 2004 005152 A1 offenbart.

Grundsätzlich ist das Mitführen eines mobilen Endgeräts, insbesondere eines Mobiltelefons, insbesondere seitens des Fahrers, als Gefahrenquelle zu sehen, da dieses, insbesondere bei eingehenden Anrufen oder Textnachrichten, regelmäßig eine Ablenkung für den Fahrer darstellt, wonach dieser seine Aufmerksamkeit nicht ausschließlich dem Verkehrsgeschehen, sondern dem mobilen Endgerät, insbesondere dem Mobiltelefon, widmet.

Eine weitere Möglichkeit, die Aufmerksamkeit des Fahrers vom Verkehrsgeschehen abzulenken, ist durch Einstellungen entsprechender Betriebsparameter entsprechender kraftfahrzeugseitig vorgesehener Fahrzeugsysteme gegeben, deren Vornahme oftmals grundsätzlich aufwändig ist und sonach, insbesondere bei Fahrt in dichtem Verkehr, eine Gefahrenquelle darstellen kann. Beispielsweise sei die Bedienung eines die Klimatisierung des Innenraums des Kraftfahrzeugs betreffenden Klimasystems genannt, welche eine Vielzahl an Temperatur-, Gebläsestärke- und Bereichseinstellungen umfassen kann.

Der Erfindung liegt das Problem zugrunde, ein Kraftfahrzeug derart zu verbessern, dass die Gefahr von, insbesondere auf die Bedienung kraftfahrzeugseitig vorgesehener Fahrzeugsysteme und/oder mobiler Endgeräte zurückzuführender, Ablenkungen eines Insassen, insbesondere des Fahrers, reduziert ist.

Das Problem wird gelöst durch ein erfindungsgemäßes Kraftfahrzeug, nach Anspruch 1, umfassend eine Positionserfassungseinrichtung zur Erfassung einer die Position wenigstens eines Insassen des Kraftfahrzeugs und/oder eines dem Insassen zuordenbaren oder zugeordneten mobilen Endgeräts, insbesondere eines Mobiltelefons, innerhalb des Kraftfahrzeugs beschreibenden Positionsinformation unter Berücksichtigung einer Position des mobilen Endgeräts und/oder einer von dem mobilen Endgerät gelieferten Registrierungsinformation, sowie eine zur Einstellung wenigstens eines Betriebsparameters eines Fahrzeugsystems unter Berücksichtigung einer von dem mobilen Endgerät gelieferten Steuerinformation und der Positionsinformation und/oder zur Übermittlung wenigstens einer wenigstens eine Funktion des mobilen Endgeräts beeinflussenden Betriebsinformation an das mobile Endgerät in Abhängigkeit der Positionsinformation ausgebildete Steuereinrichtung.

Die vorliegende Erfindung beruht auf dem Gedanken, zum einen Einstellungen entsprechender Betriebsparameter entsprechender kraftfahrzeugseitig vorhandener Fahrzeugsysteme in Abhängigkeit der Position wenigstens eines Insassen des Kraftfahrzeugs und/oder der Position eines einem Insassen zuordenbaren bzw., zugeordneten mobilen Endgerät, das heißt, insbesondere einem Mobiltelefon, vorzunehmen, so dass diese in Abhängigkeit der erfassten Position des Insassen und/oder des mobilen Endgeräts vorgenommen werden, und zum anderen, alternativ oder ergänzend, ebenfalls in Abhängigkeit der Position des Insassen und/oder des diesem zuordenbaren oder zugeordneten mobilen Endgeräts, über die Übermittlung entsprechender Betriebsparameter an das mobile Endgerät entsprechende Funktionen des mobilen Endgeräts zu beeinflussen, d. h. insbesondere einzuschränken.

Zur Ermittlung der Position des wenigstens einen Insassen innerhalb des Kraftfahrzeugs respektive des wenigstens einen dem Insassen zuordenbaren oder zugeordneten mobilen Endgeräts ist eine Positionserfassungseinrichtung vorgesehen, welche unter Berücksichtigung der aktuellen Position des mobilen Endgeräts und/oder einer von dem mobilen Endgerät gelieferten Registrierungsinformation und/oder gegebenenfalls der aktuellen Position eines Insassen, eine die Position des Insassen und/oder des dem Insassen zuordenbaren oder zugeordneten mobilen Endgeräts innerhalb des Kraftfahrzeugs beschreibende Positionsinformation ermittelt. Das heißt, die aktuelle Position des Insassen, welche über die Positionserfassungseinrichtung auf später noch genannte Weise ermittelbar ist, und/oder die aktuelle Position des mobilen Endgeräts, welche sich beispielsweise aus einer von diesem an das Kraftfahrzeug übermittelten Registrierungsinformation ergibt, wird in die Positionsinformation umgewandelt.

Sonach kann die Positionsinformation z. B. eine Sitzposition und/oder Rolle des Insassen innerhalb des Kraftfahrzeugs beschreiben. Die Sitzposition gibt an, auf welchem kraftfahrzeugseitig vorgesehenen Sitz (Fahrersitz, Beifahrersitz, Rückbank etc.) sich ein Insasse befindet. Die Rolle des Insassen innerhalb des Kraftfahrzeugs, welche allgemein nach der Rolle des Insassen als Fahrer oder Mitfahrer unterschieden werden kann, wobei die Rolle als Mitfahrer weiter in den neben dem Fahrer befindlichen Beifahrer und weitere Mitfahrer unterschieden werden kann, ist gegebenenfalls ebenso relevant für die Einstellung entsprechender Betriebsparameter und insbesondere die Beeinflussung entsprechender Funktionen entsprechender mobiler Endgeräte. Die Beeinflussung entsprechender Funktionen eines mobilen Endgeräts, insbesondere eines fahrerseitigen mobilen Endgeräts, bedeutet eine Reduzierung des von dem mobilen Endgerät ausgehenden Ablenkungspotentials, welches Ablenkungspotential in der Regel eine hohe Gefahr im Hinblick auf unaufmerksamkeitbedingte Fahrfehler bedeutet.

Die Positionsinformation wird über eine Datenverbindung, insbesondere einen Fahrzeugbus, an eine Steuereinrichtung übermittelt, welche gemäß einer seitens des mobilen Endgeräts gelieferten Steuerinformation und in Abhängigkeit der Positionsinformation eine Einstellung eines entsprechenden Betriebsparameters vornimmt. Unter einer entsprechenden von dem mobilen Endgerät übermittelten Steuerinformation ist eine für wenigstens einen Betriebsparameter wenigstens eines Fahrzeugsystems steuerrelevante Information zu verstehen, welche etwa an eine dem Fahrzeugsystem zugeordnete Steuereinrichtung übermittelt wird, so dass letztere eine entsprechende Änderung bzw. Anpassung eines Betriebsparameters vornimmt. Die Abhängigkeit der Einstellung des Betriebsparameters von der Positionsinformation ergibt sich beispielsweise daraus, dass diese nur bereichsbezogen, das heißt nur den von der Positionsinformation beschriebenen innerhalb des Kraftfahrzeugs befindlichen Bereich betreffend erfolgt. So kann z. B. eine Einstellung einer Klimaanlage bei einer die Position eines Insassen im linken, vorderen Bereich der Fahrgastzelle bzw. einer die Position eines dem Insassen zugeordneten mobilen Endgeräts im linken, vorderen Bereich der Fahrgastzelle beschreibenden Positionsinformation entsprechend nur für den linken, vorderen Bereich der Fahrgastzelle, mithin den Bereich des Fahrers, vorgenommen werden. Das vorstehende Beispiel bezieht sich auf ein für Rechtsverkehr ausgelegtes Kraftfahrzeug. Das erfindungsgemäße Prinzip lässt sich selbstverständlich auch auf für Linksverkehr ausgelegte Kraftfahrzeuge übertragen.

Die Einstellung des Fahrzeugsystems kann z . B. ein Fahrzeugassistenzsystem und/oder ein Multimediasystem und/oder ein Klimasystem und/oder ein Innenbeleuchtungssystem und/oder ein Betätigungssystem wenigstens einer Tür und/oder eines Fensters und/oder ein System zur Einstellung einer Sitzposition betreffen. Die Aufzählung ist nicht abschließend. Grundsätzlich können Betriebsparameter jedweder kraftfahrzeugseitig vorhandener Fahrzeugsysteme entsprechend eingestellt werden.

Alternativ oder ergänzend ist es möglich, dass die Steuereinrichtung eine wenigstens eine Funktion des mobilen Endgeräts beeinflussende, insbesondere einschränkende, Betriebsinformation an das mobile Endgerät übermittelt. Der die wenigstens eine Funktion des mobilen Endgeräts beeinflussende Inhalt der Betriebsinformation ist dabei wiederum durch die Positionsinformation bestimmt, das heißt der für die Funktionalität des mobilen Endgeräts steuerrelevante Inhalt der Betriebsinformation wird in Abhängigkeit der Positionsinformation erzeugt. Mithin werden unter Berücksichtigung der aktuellen Position des mobilen Endgeräts innerhalb des Kraftfahrzeugs entsprechend unterschiedliche Betriebsinformationen an das mobile Endgerät übermittelt, so dass beispielsweise bei Erfassung eines - bezogen auf ein für Rechtsverkehr ausgelegtes Kraftfahrzeug - im linken, vorderen Bereich der Fahrgastzelle, das heißt im Bereich des Fahrers, befindlichen mobilen Endgeräts, eine im Vergleich zu anderen Positionen innerhalb des Kraftfahrzeugs deutlichere Beeinflussung, das heißt insbesondere Einschränkung, der Funktionalität des mobilen Endgeräts, herbeiführende Betriebsinformation an das mobile Endgerät respektive eine diesem zugehörige Steuereinrichtung übermittelt wird.

Unter einem mobilen Endgerät im erfindungsgemäßen Sinne ist jede einem Insassen zuordenbare oder zugeordnete elektronische portable Vorrichtung zu verstehen, welche mindestens eine Funktion aufweist. Neben dem genannten Beispiel eines Mobiltelefons, insbesondere Smartphones, sind hierunter auch portable Multimediaeinrichtungen, wie z. B. Notebooks, MP3-Abspielgeräte etc. zu verstehen.

Die Einstellung einer Funktion des mobilen Endgeräts kann z. B. eine Beschränkung des Empfangs eingehender Informationsinhalte, insbesondere eingehender Telefonate, Text- und/oder Multimedianachrichten, und/oder eine Reduzierung der auf einem Anzeigemittel des mobilen Endgeräts dargestellten Inhalte und/oder eine Reduzierung deren Helligkeit und/oder ein Abschalten des Anzeigemittels und/oder eine Reduzierung der Lautstärke bzw. Intensität von Signaltönen des mobilen Endgeräts und/oder ein Abschalten von Signaltönen und/oder eine reduzierte Intensität von Vibrationssignalen des mobilen Endgeräts und/oder ein Abschalten von Vibrationssignalen und/oder ein Abschalten des mobilen Endgeräts sein. Die Aufzählung ist nicht abschließend. Grundsätzlich kann jedwede Funktion eines entsprechenden mobilen Endgeräts, insbesondere eines Mobiltelefons, über eine entsprechende Betriebsinformation beeinflusst werden.

Das erfindungsgemäße Prinzip ermöglicht sonach unter Berücksichtigung der aktuellen bzw. tatsächlichen Position eines Insassen respektive eines einem Insassen zuordenbaren oder zugeordneten mobilen Endgeräts eine positionsspezifische Einstellung entsprechender Betriebsparameter entsprechender Fahrzeugsysteme und/oder eine positionsspezifische Beeinflussung entsprechender Funktionen des dem Insassen zuordenbaren oder zugeordneten mobilen Endgeräts. Mithin sind anhand der die Position des Insassen respektive des diesem zuordenbaren oder zugeordneten mobilen Endgeräts beschreibenden Positionsinformation zum einen positionsspezifische oder bereichsbezogene Einstellungen entsprechender Betriebsparameter möglich, so dass entsprechende Einstellungen weniger aufwändig vornehmbar sind. Beispielsweise ist anhand der Positionsinformation, wie erwähnt, eine bereichsbezogene Temperatureinstellung eines Klimasystems auf einfache Weise durchführbar.

Zum anderen bedingt die alternativ oder zusätzlich durchführbare Beeinflussung, insbesondere Beschränkung, entsprechender Funktionen des mobilen Endgeräts eine Reduzierung des Ablenkungspotentials des mobilen Endgeräts für einen Insassen, das heißt insbesondere den Fahrer. Wie aus den oben genannten Beispielen möglicher Funktionsbeeinflussungen bezüglich eines fahrerseitigen Mobiltelefons hervorgeht, kann eine entsprechende Betriebsinformation z. B. eine Beschränkung der Lautstärke entsprechender Signaltöne des Mobiltelefons bedingen, so dass der Fahrer weniger von eingehenden Telefonanrufen oder Textnachrichten abgelenkt ist. Auch eine in Abhängigkeit der Position des Insassen angepasste Menüstruktur eines mobilen Endgeräts ist denkbar, so dass beispielsweise für ein mobiles Endgerät eines als Fahrer agierenden Insassen eine besonders einfach überschaubare, gegebenenfalls reduzierte Menüstruktur einstellbar ist.

Nachfolgend werden verschiedene beispielhafte Möglichkeiten der über die Positionserfassungseinrichtung durchgeführten Ermittlung der Positionsinformation gegeben.

Die Positionserfassungseinrichtung kann zur Ermittlung der Positionsinformation anhand von von einer dem mobilen Endgerät zugehörigen Bewegungssensorik gelieferten endgerätspezifischen Bewegungssignalen ausgebildet sein. Die endgerätespezifischen Bewegungssignale, worunter z. B. auf die Bewegungssensorik wirkende Beschleunigungen beschreibende Beschleunigungssignale oder entsprechende Drehraten fallen, lassen demnach Rückschlüsse auf die Position des mobilen Endgeräts zu. Dies gilt insbesondere, wenn die oder eine Ausgangsposition des mobilen Endgeräts bekannt ist.

Es kann zusätzlich wenigstens eine kraftfahrzeugspezifische Bewegungssignale liefernde kraftfahrzeugseitige Bewegungssensorik vorgesehen sein, wobei die Positionserfassungseinrichtung zur Ermittlung der Positionsinformation unter Berücksichtigung der kraftfahrzeugspezifischen Bewegungssignale ausgebildet ist. Die Positionsinformation ergibt sich sonach insbesondere aus der Differenz der kraftfahrzeugspezifischen und der endgerätespezifischen Bewegungssignale. Mit anderen Worten kann die etwa auf eine Fahrt auf unebenem Untergrund zurückzuführende Bewegung des Kraftfahrzeugs, welche sich in entsprechenden kraftfahrzeugspezifischen Bewegungssignalen widerspiegelt, von den endgerätespezifischen Bewegungssignalen unterschieden, das heißt gefiltert werden, so dass ausschließlich endgerätespezifische Bewegungssignale, welche die Bewegungen des mobilen Endgeräts relativ zum Kraftfahrzeug beschreiben, bei der Ermittlung der Positionsinformation berücksichtigt werden.

Es ist möglich, dass die Positionserfassungseinrichtung zur Ermittlung der Positionsinformation anhand der in Abhängigkeit der Position innerhalb des Kraftfahrzeugs bei einer von diesem durchfahrenen Kurve variierenden, auf das mobile Endgerät wirkenden Querbeschleunigung ausgebildet ist. Dieser Ausführungsform liegt das Prinzip zugrunde, dass auf radial beabstandet zu einer die Längsmittelachse des Kraftfahrzeugs bildenden Linie angeordnete mobile Endgeräte bei Durchfahren einer Kurve unterschiedliche Querbeschleunigungen, welche gemäß dem Zusammenhang a_{z} = ω x (ω x r) (mit a_{Z}: Querbeschleunigung, ω: Winkelgeschwindigkeit, r: Kurvenradius) proportional zum Kurvenradius sind, wirken. So ist beispielsweise bei Durchfahren einer Rechtskurve die auf ein fahrerseitig, das heißt links von der Längsmittelachse des Kraftfahrzeugs befindliches, mobiles Endgerät wirkende Querbeschleunigung höher als für ein beifahrerseitig, das heißt rechts von der Längsmittelachse, befindliches mobiles Endgerät. Dies ergibt sich aus den jeweils unterschiedlichen Kurvenradien, da das fahrerseitig befindliche mobile Endgerät im Vergleich zum beifahrerseitig befindlichen mobilen Endgerät quasi eine Kurve mit einem größeren Radius durchfährt.

In diesem Zusammenhang ist es insbesondere möglich, die von den jeweiligen Bewegungssensoriken über einen definierten Zeitraum, das heißt bei Durchfahren mehrerer Kurven, gelieferten Bewegungssignale zu erfassen und entsprechend auszuwerten. Insofern kann anhand der von einer ersten Bewegungssensorik über einen längeren Zeitraum bei Durchfahren z. B. von Rechtskurven gelieferten Bewegungssignale im Vergleich mit den von wenigstens einer weiteren Bewegungssensorik eines weiteren mobilen Endgeräts oder einer kraftfahrzeugseitig installierten Bewegungssensorik, gelieferten Bewegungssignalen, aus welchem Vergleich z. B. eine höhere auf die erste Bewegungssensorik wirkende Querbeschleunigung festgestellt wird, geschlossen werden, dass die erste Bewegungssensorik und somit das diese tragende mobile Endgerät fahrerseitig angeordnet ist.

Zweckmäßig umfasst eine endgeräteseitige und/oder kraftfahrzeugseitige Bewegungssensorik wenigstens einen Inertialsensor. Inertialsensoren dienen der Erfassung rotatorischer und/oder translatorischer Bewegungen und sind somit zur Ermittlung entsprechender Beschleunigungen, Drehraten etc. geeignet. In Abhängigkeit der Anzahl der die jeweiligen Bewegungssensorik bildenden Inertialsensoren ist somit eine hochaufgelöste Darstellung von Bewegungen möglich. Eine erfindungsgemäße Bewegungssensorik kann z. B. drei bis sechs Inertialsensoren umfassen.

Alternativ oder ergänzend kann es sein, dass die Positionserfassungseinrichtung zur Ermittlung der Positionsinformation anhand einer von wenigstens einer kraftfahrzeugseitig vorgesehenen Ortungsantenne zur Ortung des mobilen Endgeräts gelieferten Ortungsinformation ausgebildet ist. Ortungsantennen ermöglichen insbesondere eine Ortung entsprechender mobiler Endgeräte, so dass die daraus ermittelte Positionsinformation unmittelbar die Position eines entsprechenden mobilen Endgeräts und mittelbar eine Position eines Insassen, welchem das mobile Endgerät zugeordnet ist, beschreiben kann. Die Ortungsantennen arbeiten auf dem Prinzip der Funkortung, wonach eine Signalintensität in Abhängigkeit des Abstands des mobilen Endgeräts von der jeweiligen Ortungsantenne variiert und entsprechend auf eine Position des mobilen Endgeräts rückgeschlossen werden kann. Selbstverständlich kann das Kraftfahrzeug mehrere, definiert über den Innenraum des Kraftfahrzeugs verteilt angeordnete, das heißt zum Beispiel an jedem Sitz angeordnete, Ortungsantennen aufweisen, wobei Rückschlüsse auf die Position eines mobilen Endgeräts z. B. aus dem jeweils stärksten Signal erhalten werden können.

Es ist auch denkbar, dass die Positionserfassungseinrichtung zur Ermittlung der Positionsinformation anhand von mit einer Kamera des mobilen Endgeräts aufgenommenen, den oder einen Teil des Innenraums des Kraftfahrzeugs darstellenden Bilddaten, welche Rückschlüsse auf die Position des Insassen und/oder des mobilen Endgeräts erlauben, ausgebildet ist. Sonach können über entsprechende in den Bilddaten enthaltene Informationen Rückschlüsse auf den Aufnahmeort, das heißt die Position des Insassen respektive des mobilen Endgeräts gezogen werden. Hierfür umfasst die Positionserfassungseinrichtung geeignete Bildauswertemittel, welche für die jeweilige Position innerhalb des Kraftfahrzeugs charakteristische Merkmale, wie z. B. ein Lenkrad oder die Rückseite eines Fahrersitzes, ermitteln und anhand dieser entsprechende Rückschlüsse auf die Position des Insassen respektive des mobilen Endgeräts erlauben. Die Aufnahme entsprechender Bilddaten kann manuell über einen Insassen oder automatisch seitens des mobilen Endgeräts durchgeführt werden. Letztere Variante ist insbesondere nützlich, wenn das mobile Endgerät über eine Kommunikation mit dem Kraftfahrzeug erkennt, dass es sich innerhalb des Kraftfahrzeugs befindet.

Es ist zudem möglich, dass die Positionserfassungseinrichtung zur Ermittlung der Positionsinformation anhand einer, insbesondere eine Positionsinformation enthaltenden, eine Registrierung des mobilen Endgeräts mit dem Kraftfahrzeug betreffenden Registrierungsinformation ausgebildet ist. Gemäß dieser Ausführungsform wird das mobile Endgerät automatisch oder manuell mit dem Kraftfahrzeug registriert, das heißt an diesem angemeldet. Über die Registrierungsinformation, welche beispielsweise eine Information darüber enthält, dass das zu registrierende mobile Endgerät dem Fahrer zuzuordnen ist, kann ebenso eine Position ermittelt werden. Sonach ist nach erfolgter Registrierung eines mobilen Endgeräts als dem Fahrer zugehörig davon auszugehen, dass es sich an oder im Bereich des Fahrersitzes befindet.

Im Innenraum des erfindungsgemäßen Kraftfahrzeugs kann wenigstens ein Marker angeordnet sein, welcher von dem mobilen Endgerät erfassbar ist, wobei das mobile Endgerät bei Erfassung des Markers zur Erzeugung einer Hilfspositionsinformation und zur Übermittlung dieser an die Positionserfassungseinrichtung ausgebildet ist, welche anhand der übermittelten Hilfspositionsinformation zur Ermittlung der Positionsinformation ausgebildet ist. Sonach kann bei Erfassung eines entsprechenden Markers, welcher an einer definierten Stelle des Innenraums des Kraftfahrzeugs angeordnet ist, seitens des mobilen Endgeräts eine entsprechende Hilfspositionsinformation erzeugt und an die Positionserfassungseinrichtung übermittelt werden, welche anhand der Hilfspositionsinformation, welche beispielsweise Informationen über einen im Bereich der Fahrertür angeordneten Marker enthält, eine entsprechende Positionsinformation ermittelt werden. Im vorgenannten Beispiel beschreibt die Positionsinformation die Position des mobilen Endgeräts oder des Insassen für den Bereich des Fahrersitzes. Die Erfassung der Marker kann wiederum manuell über eine Betätigung einer entsprechenden Funktion des mobilen Endgeräts seitens eines Insassen oder automatisch über das mobile Endgerät erfolgen. Zweckmäßig ist jedem Sitzplatz innerhalb des Kraftfahrzeugs wenigstens ein Marker zugeordnet.

Grundsätzlich kann die Positionserfassungseinrichtung zur mehrmaligen Ermittlung einer Positionsinformation eines, insbesondere bereits über eine Positionsinformation in einer Position erfassten, mobilen Endgeräts ausgebildet sein. Entsprechend können Änderungen der Position eines mobilen Endgeräts, wenn dieses z. B. in den Fond des Fahrzeugs gegeben wird, erfasst werden, wobei, insbesondere kontinuierlich oder intermittierend, überprüft wird, ob sich die einem mobilen Endgerät zugehörige Positionsinformation geändert hat. Hierbei sind insbesondere Vergleiche aktueller Positionsinformationen mit einer ursprünglich ermittelten, gegebenenfalls in einem Speichermittel abgelegten, Positionsinformation denkbar.

Die Einstellung des Betriebsparameters des Fahrzeugsystems und/oder der Funktion des mobilen Endgeräts ist insbesondere temporär. Die Funktionsbeeinflussung ist selbstverständlich nicht so zu verstehen, dass die die wenigstens eine Funktion des mobilen Endgeräts beeinflussende Betriebsinformation das mobile Endgerät derart umkonfiguriert, dass dieses beispielsweise überhaupt keine Signaltöne mehr ausgeben kann. Der Begriff "temporär" bezieht sich z. B. auf die Dauer, in der sich das mobile Endgerät innerhalb des Kraftfahrzeugs befindet und kann somit ein bestimmtes Zeitintervall beschreiben. Gegebenenfalls kann eine temporäre Beeinflussung der Funktion des mobilen Endgeräts auch an wenigstens ein zusätzliches Kriterium, wie z. B. einen Fahrbetrieb oder einen bestimmten Betriebsparameter, wie z. B. eine vorgegebene oder vorgebbare Mindestgeschwindigkeit, des Kraftfahrzeugs geknüpft sein, so dass nur bei Vorliegen des Kriteriums eine entsprechende Einstellung eines Betriebsparameters respektive Beeinflussung einer Funktion des mobilen Endgeräts in Kraft ist. Die Funktionsbeeinflussung erfolgt hierbei sonach dynamisch in Abhängigkeit des Vorliegens des wenigstens einen Kriteriums.

In Weiterbildung der Erfindung weist das erfindungsgemäße Kraftfahrzeug wenigstens eine, insbesondere einen Teil eines kraftfahrzeugseitigen Drahtlosnetzwerks bildende, Sende- und/oder Empfangseinrichtung auf, über welche es zur Kommunikation mit dem mobilen Endgerät ausgebildet ist. Die kraftfahrzeugseitige Sende- und/oder Empfangseinrichtung ist sonach zur Kommunikation mit einer entsprechenden, einen Teil des mobilen Endgeräts bildenden Sende- und/oder Empfangseinrichtung ausgebildet, welche Sende- und/oder Empfangseinrichtungen miteinander eine Kommunikationsverbindung aufbauen können. Das Drahtlosnetzwerk kann beispielsweise ein WLAN- oder Bluetooth-Netzwerk sein.

Die Steuereinrichtung kann bei der Einstellung des wenigstens einen Betriebsparameters und/oder der wenigstens einen Funktion des mobilen Endgeräts zweckmäßig zur Berücksichtigung wenigstens einer aktuellen Betriebsinformation des Kraftfahrzeugs und/oder wenigstens einer aktuellen Verkehrsinformation ausgebildet sein. Dieser Aspekt der Erfindung betrifft insbesondere die Beeinflussung der wenigstens einen Funktion des mobilen Endgeräts, welches sonach erst bei Überschreiten einer als Betriebsinformation des Kraftfahrzeugs zu erachtenden Mindestgeschwindigkeit (z. B. 30 km/h) erfolgen kann (vgl. hierzu auch den Abschnitt zur temporären Beeinflussung der wenigstens einen Funktion des mobilen Endgeräts). Gleichermaßen können auch Verkehrsinformationen, wie im Fahrzeugvorfeld befindliche, potentielle Gefahrensituation, berücksichtigt werden, so dass eine Beeinflussung der Funktionalität des mobilen Endgeräts nur bei Vorliegen entsprechender Gefahrenmeldungen vorgenommen wird. Selbstverständlich können die Betriebsinformationen des Kraftfahrzeugs, worunter neben der genannten Ist-Geschwindigkeit z. B. auch Motordrehzahlen, Beschleunigungen, Gierraten etc. verstanden werden können, respektive die Verkehrsinformationen auch eine stärkere Beeinflussung der Funktionalität des mobilen Endgeräts bedingen. Beispielsweise kann das fahrerseitig erfasste Mobiltelefon über eine erste Betriebsinformation auf lautlos gestellt sein, wobei bei Überschreiten einer Geschwindigkeit z. B. von 100 km/h eine weitere Betriebsinformation übermittelt wird, welche den Empfang eingehender Anrufe oder Textnachrichten gänzlich unterdrückt.

Vorteilhaft umfasst das erfindungsgemäße Kraftfahrzeug wenigstens eine Plausibilisierungseinrichtung, welche zur Überprüfung der von der Positionserfassungseinrichtung ermittelten Positionsinformationen ausgebildet ist. Die Plausibilisierungseinrichtung kann beispielsweise in Form einer Sitzbelegungssensorik, kraftfahrzeuginnenraumseitig vorgesehenen Kameras oder dergleichen vorliegen und zusätzlich Informationen über die Position eines Insassen und/oder eines diesem zuordenbaren oder zugeordneten mobilen Endgeräts liefern. Sonach kann anhand einer Sitzbelegungssensorik überprüft werden, ob eine seitens der Positionserfassungseinrichtung ermittelte, eine Position eines Insassen auf dem Fahrersitz beschreibende Positionsinformation insofern valide ist, als sich tatsächlich ein Insasse auf dem Fahrersitz befindet.

Daneben betrifft die vorliegende Erfindung ein Verfahren zur Einstellung wenigstens eines Betriebsparameters wenigstens eines Fahrzeugsystems eines Kraftfahrzeugs und/oder wenigstens einer Funktion wenigstens eines einem Insassen des Kraftfahrzeugs zuordenbaren oder zugeordneten mobilen Endgeräts, insbesondere eines Mobiltelefons. Das erfindungsgemäße Verfahren umfasst die Schritte der Ermittlung wenigstens einer die Position wenigstens eines Insassen eines Kraftfahrzeugs und/oder eines dem Insassen zuordenbaren oder zugeordneten mobilen Endgeräts, insbesondere eines Mobiltelefons, innerhalb des Kraftfahrzeugs beschreibenden Positionsinformation unter Berücksichtigung der Position des mobilen Endgeräts und/oder einer von dem mobilen Endgerät gelieferten Registrierungsinformation, sowie die Einstellung wenigstens eines Betriebsparameters eines Fahrzeugsystems unter Berücksichtigung einer von dem mobilen Endgerät gelieferten Steuerinformation und der Positionsinformation und/oder die Übermittlung und Einstellung wenigstens einer wenigstens eine Funktion des mobilen Endgeräts beeinflussenden Betriebsinformation an das mobile Endgerät in Abhängigkeit der Positionsinformation.

Gemäß dem erfindungsgemäßen Verfahren ist es sonach zunächst vorgesehen, eine die Position wenigstens eines Insassen eines Kraftfahrzeugs und/oder eines einem Insassen zuordenbaren oder zugeordneten mobilen Endgeräts, insbesondere eines Mobiltelefons, innerhalb des Kraftfahrzeugs beschreibende Positionsinformation zu ermitteln. Die Positionsinformation, welche insbesondere eine Sitzposition und/oder eine Rolle des Insassen innerhalb des Kraftfahrzeugs beschreibt, gibt sonach an, in welchem Bereich innerhalb des Kraftfahrzeugs sich ein Insasse respektive ein mobiles Endgerät befindet. In Abhängigkeit der Positionsinformation erfolgt eine Einstellung wenigstens eines Betriebsparameters eines Fahrzeugsystems unter Berücksichtigung einer von dem mobilen Endgerät gelieferten Steuereinformation und der Positionsinformation und/oder eine Übermittlung wenigstens einer wenigstens eine Funktion des mobilen Endgeräts beeinflussenden Betriebsinformation an das mobile Endgerät. Die Einstellung des wenigstens einen Betriebsparameters des entsprechenden Fahrzeugsystems erfolgt entweder über eine kraftfahrzeugseitig oder endgeräteseitig vorgesehene Steuereinrichtung, welche entsprechende Steuerbefehle an das jeweils betroffene Fahrzeugsystem liefert.

Grundsätzlich gelten zum erfindungsgemäßen Verfahren sämtliche Ausführungen bezüglich des erfindungsgemäßen Kraftfahrzeugs.

Sonach kann die Positionserfassungseinrichtung die Positionsinformation beispielsweise anhand von von einer dem mobilen Endgerät zugehörigen Bewegungssensorik gelieferten endgerätespezifischen Bewegungssignalen ermitteln.

Sofern wenigstens eine kraftfahrzeugspezifische Bewegungssignale liefernde kraftfahrzeugseitige Bewegungssensorik vorgesehen ist, ermittelt die Positionserfassungseinrichtung vorteilhafterweise die Positionsinformation unter Berücksichtigung der kraftfahrzeugspezifischen Bewegungssignale. Hierbei ist es insbesondere möglich, Bewegungen des Kraftfahrzeugs von Bewegungen des mobilen Endgeräts zu unterscheiden, so dass Letztere quasi eine Relativbewegung des mobilen Endgeräts zum Kraftfahrzeug beschreiben, welche dann der Ermittlung der Positionsinformation zugrunde gelegt wird.

Insbesondere ist es möglich, dass die Positionserfassungseinrichtung die Positionsinformation anhand der in Abhängigkeit der Position innerhalb des Kraftfahrzeugs bei einer von diesem durchfahrenen Kurve variierenden, auf das mobile Endgerät wirkenden Querbeschleunigungen ermittelt.

Die im Rahmen des erfindungsgemäßen Verfahrens verwendeten endgeräteseitigen und/oder kraftfahrzeugseitigen Bewegungssensoriken umfassen vorzugsweise wenigstens einen Inertialsensor. In Abhängigkeit der Anzahl der die jeweiligen Bewegungssensoriken bildenden Inertialsensoren sind somit Bewegungen bzw. Bewegungsfolgen des mobilen Endgeräts respektive des Kraftfahrzeugs hochaufgelöst darstellbar.

Es ist möglich, dass die Positionserfassungseinrichtung die Positionsinformation anhand einer von wenigstens einer kraftfahrzeugseitig vorgesehenen Ortungsantenne zur Ortung des mobilen Endgeräts gelieferten Ortungsinformation ermittelt. Hierbei erfolgt die Ermittlung der Positionsinformation auf Basis einer Funkortung, wonach auf eine Position eines mobilen Endgeräts in Abhängigkeit eines in Abhängigkeit des Abstands des mobilen Endgeräts zu einer oder mehrerer Ortungsantennen variierenden Intensitätssignals geschlossen werden kann. Grundsätzlich kann auch das mobile Endgerät entsprechende Ortungsantennen aufweisen, so dass dieses z. B. einen Abstand zu einem Lenkrad erfassen kann, welcher Abstand dann als Ortungsinformation an das Kraftfahrzeug übermittelt und dort zur Ermittlung der Positionsinformation herangezogen wird.

Es ist ferner denkbar, dass die Positionserfassungseinrichtung die Positionsinformation anhand von mit einer Kamera des mobilen Endgeräts aufgenommenen, den oder einen Teil des Innenraums des Kraftfahrzeugs darstellenden Bilddaten, welche Rückschlüsse auf die Position des Insassen und/oder des mobilen Endgeräts erlauben, ermittelt.

Ferner kann die Positionserfassungseinrichtung die Positionsinformation anhand einer, insbesondere eine Positionsinformation enthaltenden, eine Registrierung des mobilen Endgeräts mit dem Kraftfahrzeug betreffenden Registrierungsinformation ermitteln.

Es ist zudem denkbar, dass das mobile Endgerät wenigstens einen innerhalb des Innenraums des Kraftfahrzeugs angeordneten Marker erfasst, wobei das mobile Endgerät bei Erfassung des Markers eine Hilfspositionsinformation erfasst und diese an die Positionserfassungseinrichtung übermittelt, welche anhand der übermittelten Hilfspositionsinformation die Positionsinformation ermittelt.

Die im Rahmen des erfindungsgemäßen Verfahrens vorgenommene Einstellung des Betriebsparameters des Fahrzeugsystems kann ein Fahrerassistenzsystem und/oder ein Multimediasystem und/oder ein Klimasystem und/oder ein Innenbeleuchtungssystem und/oder ein Betätigungssystem wenigstens einer Tür und/oder eines Fensters und/oder ein System zur Einstellung einer Sitzposition betreffen. Die Aufzählung ist lediglich beispielhaft und nicht abschließend.

Die im Rahmen des erfindungsgemäßen Verfahrens vorgenommene Einstellung einer Funktion des mobilen Endgeräts kann eine Beschränkung des Empfangs eingehender Informationsinhalte, insbesondere eingehender Telefonate, Text- und/oder Multimedianachrichten, und/oder eine Reduzierung der auf einem Anzeigemittel des mobilen Endgeräts dargestellten Inhalte und/oder eine Reduzierung deren Helligkeit und/oder ein Abschalten des Anzeigemittels und/oder eine Reduzierung der Lautstärke von Signaltönen des mobilen Endgeräts und/oder ein Abschalten von Signaltönen und/oder eine Reduzierung der Intensität von Vibrationssignalen und/oder ein Abschalten von Vibrationssignalen und/oder ein Abschalten des mobilen Endgeräts sein. Die Aufzählung ist lediglich beispielhaft und nicht abschließend.

Die Einstellung des Betriebsparameters des Fahrzeugsystems und/oder der Funktion des mobilen Endgeräts ist vorzugsweise temporär. Die die jeweilige Funktion des mobilen Endgeräts beeinflussende Betriebsinformation bewirkt nicht, dass das mobile Endgerät derart umkonfiguriert wird, dass dieses die jeweilige Funktion überhaupt nicht mehr ausführen kann. Der Begriff "temporär" meint im erfindungsgemäßen Sinne ebenso ein bestimmtes Zeitintervall, z. B. die Dauer der Fahrt, in welcher die jeweilige Funktion des mobilen Endgeräts beeinflusst wird. Dabei können bestimmte Kriterien, wie z. B Betriebsparameter des Kraftfahrzeugs, berücksichtigt werden, welche vorliegen müssen, um überhaupt eine Funktionsbeeinflussung des mobilen Endgeräts heribeizuführen.

Die Kommunikation zwischen dem Kraftfahrzeug und dem mobilen Endgerät erfolgt zweckmäßig über eine Kommunikationsverbindung, insbesondere ein Drahtlosnetzwerk (WLAN-, Bluetooth-Netzwerk etc.) bildende, kraftfahrzeugseitige sowie endgerätseitige Sende- und/oder Empfangseinrichtungen.

Die Steuereinrichtung berücksichtigt bei der Einstellung des wenigstens einen Betriebsparameters und/oder der wenigstens einen Funktion des mobilen Endgeräts in vorteilhafter Ausgestaltung des erfindungsgemäßen Verfahrens wenigstens eine aktuelle Betriebsinformation des Kraftfahrzeugs und/oder wenigstens eine aktuelle Verkehrsinformation.

Zweckmäßig wird eine Plausibilisierungseinrichtung verwendet, welche die von der Positionserfassungseinrichtung ermittelten Positionsinformationen überprüft. Die Plausibilisierungseinrichtung überprüft die Positionsinformation beispielsweise mehrerer separat arbeitender Positionserfassungseinrichtungen, welche sich sonach bezüglich der von diesen ermittelten Positionsinformationen gegenseitig plausibilisieren. Denkbar ist auch, von einer Sitzbelegungssensorik gelieferte und/oder von gegebenenfalls kraftfahrzeuginnenraumseitig angeordneten Kameras gelieferte Signale bei der Plausibilisierung respektive Überprüfung der Positionsinformation zu verwenden.

Das erfindungsgemäße Kraftfahrzeug und das wenigstens eine mobile Endgerät können ein Kommunikationssystem bilden. Innerhalb des Kommunikationssystems sind über entsprechende, insbesondere zwischen dem Kraftfahrzeug und dem mobilen Endgerät, vorgesehene Kommunikationsverbindungen Informationen, d. h. insbesondere Positionsinformationen, Registrierungsinformationen oder Steuerinformation betreffend die Steuerung entsprechender Betriebsparameter entsprechender kraftfahrzeugseitiger Fahrzeugsysteme, übertragbar.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßem Kraftfahrzeugs in einer beispielhaften Ausführungsform;
- Fig. 2: eine Prinzipdarstellung eines erfindungsgemäßem Kraftfahrzeugs in einer beispielhaften Ausführungsform; und
- Fig. 3: eine Prinzipdarstellung eines erfindungsgemäßem Kraftfahrzeugs in einer beispielhaften Ausführungsform.

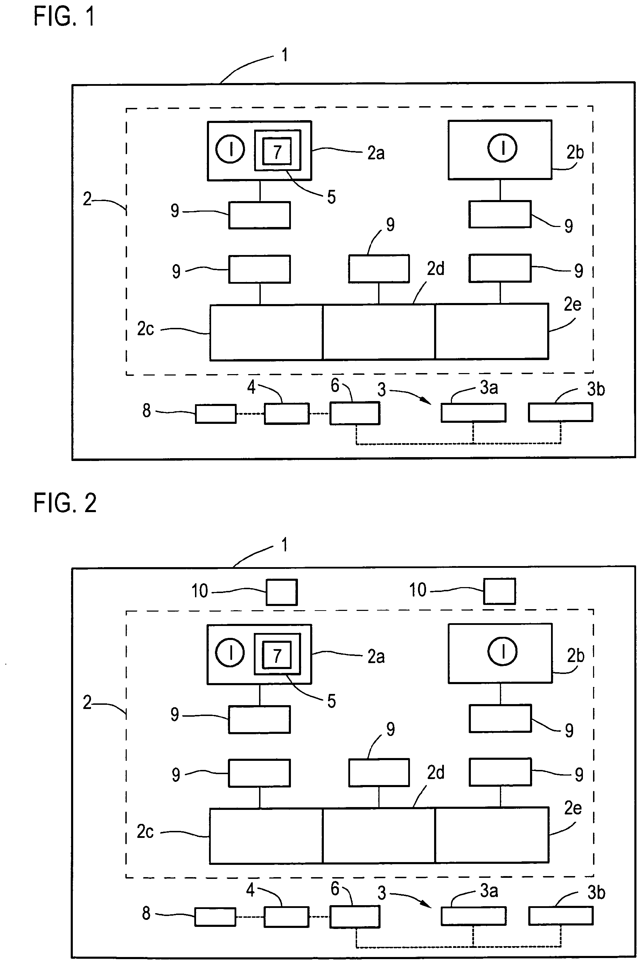

Fig. 1 zeigt eine Prinzipdarstellung eines erfindungsgemäßem Kraftfahrzeugs 1 in einer beispielhaften Ausführungsform der Erfindung. In üblicher Weise sind in der Fahrgastzelle des Kraftfahrzeugs 1 mehrere Sitzplätze 2 vorhanden, wobei 2a den Fahrersitz, 2b den Beifahrersitz und 2c - 2e entsprechende Sitze auf der Rückbank bezeichnen. Das Kraftfahrzeug 1 umfasst ferner mehrere, im Ganzen mit 3 bezeichnete Fahrzeugsysteme, wobei lediglich beispielhaft ein Klimasystem 3a und ein Multimediasystem 3b dargestellt sind. Grundsätzlich kann ein Fahrzeugsystem 3 beispielsweise auch als Fahrerassistenzsystem und/oder Innenbeleuchtungssystem und/oder Betätigungssystem wenigstens einer Tür und/oder eines Fensters und/oder System zur Einstellung einer Sitzposition ausgebildet sein.

Über eine Positionserfassungseinrichtung 4 ist die Position eines Insassen I und/oder eines dem Insassen I zuordenbaren oder zugeordneten mobilen Endgeräts 5, vorliegend beispielsweise eines Mobiltelefons, innerhalb des Kraftfahrzeugs 1 erfassbar. Die Positionserfassung erfolgt über eine seitens der Positionserfassungseinrichtung 4 ermittelten, die Position wenigstens eines Insassen I und/oder eines dem Insassen I zuordenbaren oder zugeordneten mobilen Endgeräts 5 beschreibenden Positionsinformation. Die Positionsinformation kann sonach z. B. eine Sitzposition und/oder Rolle des Insassen I innerhalb des Kraftfahrzeugs 1 anzeigen. Unter einer Rolle eines Insassen I ist z. B. die Rolle des Fahrers, des Beifahrers oder eines weiteren Mitfahrers zu verstehen.

Über eine mit der Positionserfassungseinrichtung 4 sowie den Fahrzeugsystemen 3, insbesondere über einen Fahrzeugbus, kommunizierende Steuereinrichtung 6 ist in Abhängigkeit der Positionsinformation eine seitens des mobilen Endgeräts 5 übermittelte Einstellung wenigstens eines Betriebsparameters wenigstens eines Fahrzeugsystems 2 vornehmbar. So kann über das mobile Endgerät 5 beispielsweise eine Temperatureinstellung oder eine Lautstärkeanpassung erfolgen. Die jeweilige Einstellung erfolgt bereichsbezogen, mithin also nur bezogen auf einen bestimmten Bereich bzw. Sitzplatz 2. Demzufolge kann zum Beispiel in Abhängigkeit einer die Belegung des Fahrersitzes 2a beschreibenden Positionsinformation eine Einstellung des Klimasystems 3a nur bereichsbezogen erfolgen, so dass z. B. eine Temperatureinstellung nur für den Bereich des Fahrers, in welchem sich ein Insasse I samt mobilem Endgerät 5 befindet, vorgenommen wird. Temperatureinstellungen anderer Insassen I, wie z. B. des Beifahrers, werden nicht verändert. Selbstverständlich verfügt das Kraftfahrzeug 1 hierfür über wenigstens eine, insbesondere einen Teil eines kraftfahrzeugseitigen Drahtlosnetzwerks, insbesondere WLAN-Netzwerks, bildende Sende- und/oder Empfangseinrichtung (nicht gezeigt), über welche es zur Kommunikation mit einer dem mobilen Endgerät 5 zugehörigen entsprechenden Sende- und/oder Empfangseinrichtung (nicht gezeigt) ausgebildet ist.

Alternativ oder ergänzend kann es sein, dass die Steuereinrichtung 6 in Abhängigkeit der Positionsinformation zur Übermittlung und Einstellung wenigstens einer wenigstens eine Position des mobilen Endgeräts 5 beeinflussenden, insbesondere beschränkenden, Betriebsinformation des mobilen Endgeräts 5 ausgebildet ist, über welche Betriebsinformation wenigstens eine Funktion des mobilen Endgeräts 5 entsprechend beeinflusst, insbesondere beschränkt, wird.

Das heißt, in Abhängigkeit der aktuellen Position des mobilen Endgeräts 5 und/oder des Insassen I, dem das mobile Endgerät 5 zugeordnet ist, können entsprechende Funktionen des mobilen Endgeräts 5 beeinflusst werden. Hierbei ist es z. B. möglich, dass die Beeinflussung einer Funktion des mobilen Endgeräts 5 eine Beschränkung des Empfangs eingehender Informationsinhalte, insbesondere eingehender Telefonate, Text- und/oder Multimedianachrichten, und/oder eine Reduzierung der auf einem Anzeigemittel des mobilen Endgeräts 5 dargestellten Inhalte und/oder eine Reduzierung deren Helligkeit und/oder ein Abschalten des Anzeigemittels und/oder eine Reduzierung der Lautstärke von Signaltönen des mobilen Endgeräts 5 und/oder ein Abschalten von Signaltönen und/oder eine reduzierende Intensität von Vibrationssignalen des mobilen Endgeräts 5 und/oder ein Abschalten von Vibrationssignalen und/oder ein Abschalten des mobilen Endgeräts 5 ist. Demnach ist es beispielsweise zur Fokussierung der Aufmerksamkeit des als Fahrer agierenden Insassen I auf das Verkehrsgeschehen möglich, aufmerksamkeitserregende und damit ablenkende akustische und/oder optische und/oder haptische Signale des mobilen Endgeräts 5 temporär, das heißt für einen vorgegebenen oder vorgebbaren Zeitraum, zu unterdrücken. Denkbar ist es auch, die Ausgabe entsprechender Signale für die Dauer der Fahrt komplett zu unterdrücken.

Zur Ermittlung der Positionsinformation kann die Positionserfassungseinrichtung 4 anhand von von einer dem mobilen Endgerät 5 zugehörigen, insbesondere mehrere Inertialsensoren (nicht gezeigt) aufweisenden Bewegungssensorik 7 gelieferten endgerätespezifischen Bewegungssignalen ausgebildet sein. Insbesondere erfolgt die Ermittlung der Positionsinformation anhand der in Abhängigkeit der Position innerhalb des Kraftfahrzeugs 1 bei einer von diesem durchfahrenen Kurve variierenden, auf das mobile Endgerät 5 wirkenden Querbeschleunigung gemäß dem oben beschriebenen Prinzip.

Dabei ist es vorteilhaft, dass zusätzlich wenigstens eine kraftfahrzeugspezifische Bewegungssignale liefernde kraftfahrzeugseitige Bewegungssensorik 8 vorgesehen ist, wobei die Positionserfassungseinrichtung 4 zur Ermittlung der Positionsinformation unter Berücksichtigung der kraftfahrzeugspezifischen Bewegungssignale ausgebildet ist. Demnach ist es möglich, kraftfahrzeugseitige Bewegungen von endgeräteseitigen Bewegungen zu unterscheiden, so dass letztere allein der Ermittlung der Positionsinformation zugrunde gelegt werden können. Derart ist die Genauigkeit der die Position eines Insassen I und insbesondere die Position des mobilen Endgeräts 5 innerhalb des Kraftfahrzeugs 1 beschreibenden Positionsinformation erhöhbar.

Zweckmäßig berücksichtigt die Steuereinrichtung 6 bei der Einstellung des wenigstens einen Betriebsparameters und/oder der wenigstens einen Position des mobilen Endgeräts 5 wenigstens eine aktuelle Betriebsinformation des Kraftfahrzeugs 1 und/oder wenigstens eine aktuelle Verkehrsinformation. Die Betriebsinformation kann beispielsweise die Ist-Geschwindigkeit des Kraftfahrzeugs 1 sein, so dass entsprechende Einstellungen, das heißt insbesondere die Beeinflussung der Funktionalität des mobilen Endgeräts 5, nur bei Überschreiten einer vorgegebenen oder vorgebbaren Mindestgeschwindigkeit erfolgt. Gleichermaßen können auch aktuelle, etwa im Rahmen eines kraftfahrzeugseitig vorgesehenen Stauerkennungssystems (nicht gezeigt), ermittelbare Verkehrsinformationen berücksichtigt werden, so dass - wiederum insbesondere bezüglich der Einstellung der Funktionalität des mobilen Endgeräts 5 - entsprechende Betriebsinformationen übermittelt und endgeräteseitig entsprechende Einstellungen nur bei Vorliegen von Staus oder anderen potentiellen Gefahrsituationen im Vorfeld des Kraftfahrzeugs 1 vorgenommen werden.

Alternativ oder ergänzend kann die Positionsinformation anhand einer eine Registrierung des mobilen Endgeräts 5 mit dem Kraftfahrzeug 1 betreffenden Registrierungsinformation ermitteln. Das heißt, dass der ein mobiles Endgerät 5 bei sich tragende Insasse I sich über eine Datenverbindung des mobilen Endgeräts 5 mit dem Kraftfahrzeug 1 an diesem registriert bzw. anmeldet. Die Registrierungsinformation kann eine Auskunft über die Rolle des sich registrierenden Insassen I beinhalten, das heißt, die Registrierungsinformation kann anzeigen, dass es sich bei der jeweiligen Person I z. B. um den Fahrer handelt. Sonach wird die Position des mobilen Endgeräts 5 respektive des dieses tragenden Insassen I dem Bereich des Fahrersitzes 2a zugeordnet. Entsprechend können sich selbstverständlich andere Insassen des Kraftfahrzeugs 1 mit diesem registrieren, um entsprechende Einstellungen entsprechender Betriebsparameter der Fahrzeugsysteme 3 und/oder Beeinflussungen der Funktion der von diesen getragenen mobilen Endgeräten 5 herbeizuführen.

Vorteilhaft kann ferner eine Plausibilisierungseinrichtung, vorliegend in Form von den jeweiligen Sitzplätzen 2 zugeordneten Sitzbelegungssensoren 9, vorgesehen sein, welche zur Überprüfung der von der Positionserfassungseinrichtung 4 ermittelten Positionsinformation ausgebildet ist. In dem in Fig. 1 gezeigten Ausführungsbeispiel ist der Fahrersitz 2a mit einem ein mobiles Endgerät 5 bei sich tragenden Insassen I belegt, so dass die Positionserfassungseinrichtung 4 eine entsprechende Positionsinformation ermittelt. Anhand der dem Fahrersitz 2a zugeordneten Sitzbelegungssensoren 9 kann die Positionsinformation überprüft und bestätigt werden, da auch die dem Fahrersitz 2a zugeordnete Sitzbelegungssensoren 9 angeben, dass der Fahrersitz 2a mit einem Insassen I belegt ist.

Fig. 2 zeigt eine Prinzipdarstellung eines erfindungsgemäßen Kraftfahrzeugs 1 in einer weiteren beispielhaften Ausführungsform der Erfindung. Der wesentliche Unterschied zu der in Fig. 1 gezeigten Ausführungsform besteht darin, dass die Positionserfassungseinrichtung 4 die Positionsinformation nicht oder nicht ausschließlich anhand von von einer dem mobilen Endgerät 5 zugehörigen Bewegungssensorik 7 gelieferten endgerätespezifischen Bewegungssignalen ermittelt, sondern anhand einer von von wenigstens einer kraftfahrzeugseitig vorgesehenen Ortungsantenne 10 zur Ortung mobiler Endgeräte 5 gelieferten Ortungsinformation. Entsprechende Ortungsantennen 10 sind an definierten, das heißt insbesondere den jeweiligen Sitzplätzen 2 zugeordneten, Positionen innerhalb des Kraftfahrzeugs 1 angeordnet, so dass diese insbesondere einen definierten Bereich bezüglich der diesen jeweils zugeordneten Sitzplätze 2 sensieren. Die Ortungsinformation wird jeweils auf dem Prinzip der Funkortung ermittelt, wobei anhand einer in Abhängigkeit des Abstands eines mobilen Endgeräts 5 von einer jeweiligen Ortungsantenne 10 variierenden Signalintensität Rückschlüsse auf die Position eines mobilen Endgeräts 5 geschlossen werden können. Gleichermaßen kann mit der Ortungsantenne 10 auch ein Insasse I geortet werden, da dessen Position respektive Positionsänderung gleichermaßen Änderungen der Signalintensität der Ortungsantenne 10 herbeiführen.

Entsprechende Ortungsantennen 10 können ebenso innerhalb des mobilen Endgeräts 5 vorgesehen sein, so dass das mobile Endgerät 5 zur Ermittlung einer entsprechenden Ortungsinformation ausgebildet ist, welche im Weiteren an die Positionserfassungseinrichtung 4 übertragen und dort in eine entsprechende Positionsinformation umgewandelt wird.

Es ist ferner denkbar, die Positionsinformation anhand von mit einer Kamera (nicht gezeigt) des mobilen Endgeräts aufgenommenen, den oder einen Teil des Innenraums des Kraftfahrzeugs 1 darstellenden Bilddaten, welche Rückschlüsse auf die Position des Insassen I und/oder des mobilen Endgeräts 5 erlauben, zu ermitteln. Hierbei nimmt also der Insasse I und/oder das mobile Endgerät 5 automatisch entsprechende Bilddaten des Innenbereichs des Kraftfahrzeugs 1 auf, aus welchen die Positionserfassungseinrichtung 4 über geeignete Bildauswertemittel charakteristische Merkmale des Innenraums des Kraftfahrzeugs 1 erfasst und insofern Rückschlüsse auf die Position des Insassen I respektive des mobilen Endgeräts 5 zieht. Charakteristische Merkmale des Innenraums des Kraftfahrzeugs 1 sind beispielsweise das Lenkrad, die Rückansicht des Fahrersitzes 2a oder des Beifahrersitzes 2b.

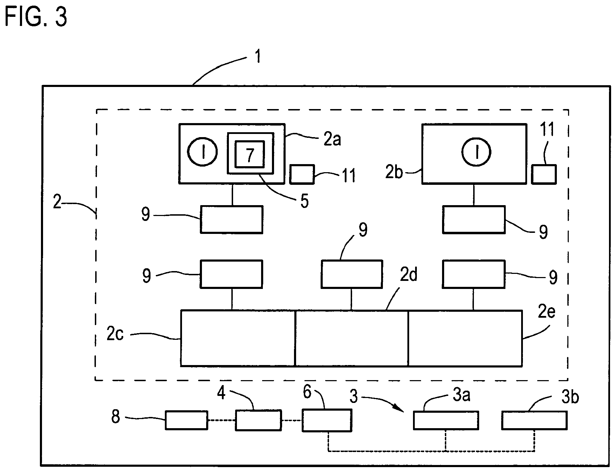

Bei der in Fig. 3 gezeigten Ausführungsform des erfindungsgemäßen Kraftfahrzeugs 1 sind innenraumseitig, den jeweiligen Sitzplätzen 2 zugeordnete Marker 11 angeordnet, welche von dem mobilen Endgerät 5 beispielsweise über eine Kamera, einen Scanner oder dergleichen erfassbar sind. Aus der Erfassung des Markers 11 kann das mobile Endgerät 5 eine Hilfspositionsinformation ermitteln und diese an die Positionserfassungseinrichtung 4 übertragen. Anhand der übertragenen Hilfspositionsinformation ermittelt die Positionserfassungseinrichtung 4 die Positionsinformation. Die Marker 11 können beispielsweise als Barcode oder dergleichen vorliegen und z. B. an einem Teil der jeweiligen Sitzplätze 2 angebracht sein.

Sämtliche, in den Fig. 1 bis 3 gezeigten Varianten der Ermittlung der Positionsinformation können auch parallel durchgeführt werden. Entsprechend können diese sich gegenseitig plausibilisieren. Beispielsweise ist es denkbar, eine erste Positionsinformation über eine in Fig. 1 dargestellte Bewegungssensorik 7 eines mobilen Endgeräts 5 und eine zweite Positionsinformation über die in Fig. 2 gezeigten Ortungsantennen 10 zu ermitteln. Durch einen Vergleich der jeweiligen unterschiedlich ermittelten Positionsinformationen können diese validiert werden.

## Patentansprüche

1. Kraftfahrzeug (1), umfassend
- eine Positionserfassungseinrichtung (4) zur Erfassung einer die Position eines einem Insassen (I) des Kraftfahrzeugs (1) zuordenbaren oder zugeordneten mobilen Endgeräts (5), insbesondere eines Mobiltelefons, innerhalb des Kraftfahrzeugs (1) beschreibenden Positionsinformation,
wobei
- eine mit der Positionserfassungseinrichtung (4) sowie Fahrzeugsystemen (3) des Kraftfahrzeugs (1) kommunizierende Steuereinrichtung (6), über die in Abhängigkeit der Positionsinformation eine seitens des mobilen Endgeräts (5) übermittelte, den von der Positionsinformation beschriebenen innerhalb des Kraftfahrzeugs befindlichen Bereich betreffend erfolgende Einstellung wenigstens eines Betriebsparameters wenigstens eines Fahrzeugsystems (3) vornehmbar ist,
**dadurch gekennzeichnet, dass**
die Positionserfassungseinrichtung (4) zur Ermittlung der Positionsinformation anhand von mit einer Kamera des mobilen Endgeräts (5) aufgenommenen, den oder einen Teil des Innenraums des Kraftfahrzeugs (1) darstellenden Bilddaten, welche Rückschlüsse auf die Position des Insassen (I) und/oder des mobilen Endgeräts (5) erlauben, ausgebildet ist.

2. Kraftfahrzeug nach Anspruch 1,
**dadurch gekennzeichnet,**
**dass** die Steuereinrichtung (6) ferner zur Übermittlung wenigstens einer wenigstens eine Funktion des mobilen Endgeräts (5) beeinflussenden Betriebsinformation an das mobile Endgerät (5) in Abhängigkeit der Positionsinformation ausgebildet ist.

3. Kraftfahrzeug nach Anspruch 1 oder 2,
**dadurch gekennzeichnet,**
**dass** die Positionserfassungseinrichtung (4) zur Ermittlung der Positionsinformation anhand von von einer dem mobilen Endgerät (5) zugehörigen Bewegungssensorik (7) gelieferten endgerätespezifischen Bewegungssignalen ausgebildet ist.

4. Kraftfahrzeug nach Anspruch 3,
**dadurch gekennzeichnet,**
**dass** wenigstens eine kraftfahrzeugspezifische Bewegungssignale liefernde kraftfahrzeugseitige Bewegungssensorik (8) vorgesehen ist, wobei die Positionserfassungseinrichtung (4) zur Ermittlung der Positionsinformation unter Berücksichtigung der kraftfahrzeugspezifischen Bewegungssignale ausgebildet ist.

5. Kraftfahrzeug nach einem der vorangehenden Ansprüche,
**dadurch gekennzeichnet,**
**dass** die Positionserfassungseinrichtung (4) zur Ermittlung der Positionsinformation anhand der in Abhängigkeit der Position innerhalb des Kraftfahrzeugs (1) bei einer von diesem durchfahrenen Kurve variierenden, auf das mobile Endgerät (5) wirkenden Querbeschleunigung ausgebildet ist.

6. Kraftfahrzeug nach einem der Ansprüche 3 bis 5,
**dadurch gekennzeichnet,**
**dass** die endgeräteseitige und/oder kraftfahrzeugseitige Bewegungssensorik (5, 8) wenigstens einen Inertialsensor umfasst.

7. Kraftfahrzeug nach einem der vorangehenden Ansprüche,
**dadurch gekennzeichnet,**
**dass** die Positionserfassungseinrichtung (4) zur Ermittlung der Positionsinformation anhand einer von wenigstens einer kraftfahrzeugseitig vorgesehenen Ortungsantenne (10) zur Ortung des mobilen Endgeräts (5) gelieferten Ortungsinformation ausgebildet ist.

8. Kraftfahrzeug nach einem der vorangehenden Ansprüche,
**dadurch gekennzeichnet,**
**dass** die Positionserfassungseinrichtung (4) zur Ermittlung der Positionsinformation anhand einer, insbesondere eine Positionsinformation enthaltenden, eine Registrierung des mobilen Endgeräts (5) mit dem Kraftfahrzeug (1) betreffenden Registrierungsinformation ausgebildet ist.

9. Kraftfahrzeug nach einem der vorangehenden Ansprüche,
**dadurch gekennzeichnet,**
**dass** in seinem Innenraum wenigstens ein Marker (11) angeordnet ist, welcher von dem mobilen Endgerät (5) erfassbar ist, wobei das mobile Endgerät (5) bei Erfassung des Markers (11) zur Erzeugung einer Hilfspositionsinformation und zur Übermittlung dieser an die Positionserfassungseinrichtung (4) ausgebildet ist, welche anhand der übermittelten Hilfspositionsinformation zur Ermittlung der Positionsinformation ausgebildet ist.

10. Kraftfahrzeug nach einem der vorangehenden Ansprüche,
**dadurch gekennzeichnet,**
**dass** die Einstellung des Fahrzeugsystems (3) ein Fahrerassistenzsystem und/oder ein Multimediasystem (3b) und/oder ein Klimasystem (3a) und/oder ein Innenbeleuchtungssystem und/oder ein Betätigungssystem wenigstens einer Tür und/oder eines Fensters und/oder ein System zur Einstellung einer Sitzposition betrifft.

11. Kraftfahrzeug nach einem der vorangehenden Ansprüche,
**dadurch gekennzeichnet,**
**dass** die Einstellung einer Funktion des mobilen Endgeräts (5) eine Beschränkung des Empfangs eingehender Informationsinhalte, insbesondere eingehender Telefonate, Text- und/oder Multimedianachrichten, und/oder eine Reduzierung der auf einem Anzeigemittel des mobilen Endgeräts (5) dargestellten Inhalte und/oder eine Reduzierung deren Helligkeit und/oder ein Abschalten des Anzeigemittels und/oder eine Reduzierung der Lautstärke von Signaltönen des mobilen Endgeräts (5) und/oder ein Abschalten von Signaltönen und/oder ein Reduzieren der Intensität von Vibrationssignalen des mobilen Endgeräts (5) und/oder ein Abschalten von Vibrationssignalen und/oder ein Abschalten des mobilen Endgeräts (5) ist.

12. Kraftfahrzeug nach Anspruch 10 oder 11,
**dadurch gekennzeichnet,**
**dass** die Einstellung des Betriebsparameters des Fahrzeugsystems (3) und/oder der Funktion des mobilen Endgeräts (5) temporär ist.

13. Kraftfahrzeug nach einem der vorangehenden Ansprüche,
**dadurch gekennzeichnet,**
**dass** es wenigstens eine, insbesondere einen Teil eines kraftfahrzeugseitigen Drahtlosnetzwerks bildende, Sende- und/oder Empfangseinrichtung aufweist, über welche es zur Kommunikation mit dem mobilen Endgerät (5) ausgebildet ist.

14. Kraftfahrzeug nach einem der vorangehenden Ansprüche,
**dadurch gekennzeichnet,**
**dass** die Steuereinrichtung (6) bei der Einstellung des wenigstens einen Betriebsparameters und/oder der wenigstens einen Funktion des mobilen Endgeräts (5) zur Berücksichtigung wenigstens einer aktuellen Betriebsinformation des Kraftfahrzeugs (1) und/oder wenigstens einer aktuellen Verkehrsinformation ausgebildet ist.

15. Kraftfahrzeug nach einem der vorangehenden Ansprüche,
**dadurch gekennzeichnet,**
**dass** es wenigstens eine Plausibilisierungseinrichtung umfasst, welche zur Überprüfung der von der Positionserfassungseinrichtung (4) ermittelten Positionsinformation ausgebildet ist.

## Claims

1. Motor vehicle (1), comprising
- a position capturing device (4) for capturing positional information describing the position of a mobile end device (5), in particular a mobile telephone, assigned or able to be assigned to an occupant (I) of the motor vehicle (1), within the motor vehicle (1),
wherein
- a control device (6) communicating with the position capturing device (4) as well as with vehicle systems (3) of the motor vehicle (1) by means of which, depending on the positional information, a setting of at least one operational parameter of at least one vehicle system (3) can be undertaken, said setting transmitted by the mobile end device (5) and taking place concerning the region within the motor vehicle described by the positional information and located,
**characterised in that**
- the position capturing device (4) is configured to determine the positional information on basis of image data captured with a camera of the mobile end device (5) and representing the interior or a part of the interior of the motor vehicle (1), which image data permit conclusions regarding the position of the occupant (I) and/or of the mobile end device (5).

2. Motor vehicle according to claim 1,
**characterised in**
**that** the control device (6) is further configured to transmit at least one operational information influencing at least one function of the mobile end device (5) to the mobile end device (5) depending on the positional information.

3. Motor vehicle according to claim 1 or 2,
**characterised in**
**that** the position capturing device (4) is configured to detect the positional information on basis of movement signals specific to the end device delivered by a movement sensor technology (7) belonging to the mobile end device (5).

4. Motor vehicle according to claim 3,
**characterised in**
**that** at least one movement sensor technology (8) on the motor vehicle side delivering movement signals specific to the motor vehicle is provided, wherein the position capturing device (4) is configured to detect the positional information by taking into consideration the movement signals specific to the motor vehicle.

5. Motor vehicle according to any of the preceding claims,
**characterised in**
**that** the position capturing device (4) is configured to detect the positional information on basis of the lateral acceleration, which varies depending on the position within the motor vehicle (1) when said motor vehicle travels round a curve, and which acts on the mobile end device (5).

6. Motor vehicle according to any of claims 3 to 5,
**characterised in**
**that** the movement sensor technology (5, 8) on the end device side and/or on the motor vehicle side comprises at least one inertial sensor.

7. Motor vehicle according to any of the preceding claims,
**characterised in**
**that** the position capturing device (4) is configured to detect the positional information on basis of locating information delivered by at least one locating antenna (10) provided on the motor vehicle side for locating the mobile end device (5).

8. Motor vehicle according to any of the preceding claims,
**characterised in**
**that** the position capturing device (4) is configured to detect the positional information on basis of registration information containing in particular positional information and concerning a registration of the mobile end device (5) with the motor vehicle (1).

9. Motor vehicle according to any of the preceding claims,
**characterised in**
**that** in its interior is arranged at least one marker (11), which can be detected by the mobile end device (5), wherein the mobile end device (5) is configured when detecting the marker (11) for the generation of an auxiliary positional information and for transmitting said auxiliary positional information to the position capturing device (4), which is configured for detecting the positional information on basis of the transmitted auxiliary positional information.

10. Motor vehicle according to any of the preceding claims,
**characterised in**
**that** the setting of the vehicle system (3) concerns a driver assistance system and/or a multimedia system (3b) and/or an air-conditioning system (3a) and/or an interior lighting system and/or an operating system of at least a door and/or a window, and/or a system for setting a seat position.

11. Motor vehicle according to any of the preceding claims,
**characterised in**
**that** the setting of a function of the mobile end device (5) is a limiting of the reception of incoming informational content, in particular of incoming telephone calls, text and/or multimedia messages, and/or a reduction in the content shown on a display means of the mobile end device (5) and/or a reduction in their brightness and/or a switching-off of the display means and/or a reduction in the volume of signal tones of the mobile end device (5) and/or a switching-off of signal tones and/or a reduction of the intensity of vibration signals of the mobile end device (5) and/or a switching-off of vibration signals and/or a switching off of the mobile end device (5).

12. Motor vehicle according to claim 10 or 11,
**characterised in**
**that** the setting of the operational parameter of the vehicle system (3) and/or of the function of the mobile end device (5) is temporary.

13. Motor vehicle according to any of the preceding claims,
**characterised in**
**that** it has at least one sending and/or receiving device, in particular forming a part of a wireless network on the motor vehicle side, by means of which it is configured for communication with the mobile end device (5).

14. Motor vehicle according to any of the preceding claims,
**characterised in**
**that** the control device (6) is configured to take into consideration at least one current operational information of the motor vehicle (1) and/or at least one current traffic information, when setting the at least one operational parameter and/or the at least one function of the mobile end device (5).

15. Motor vehicle according to any of the preceding claims,
**characterised in**
**that** it includes at least one plausibility check device, which is configured to check the positional information detected by the position capturing device (4).

## Revendications

1. Véhicule automobile (1), comprenant
- un dispositif de détection de position (4) pour détecter une information de position décrivant la position d'un terminal mobile (5) associable ou associé à un occupant (I) du véhicule automobile (1), en particulier d'un téléphone mobile, à l'intérieur du véhicule automobile (1),
dans lequel
- un dispositif de commande (6), communiquant avec le dispositif de détection de position (4) ainsi qu'avec des systèmes de véhicule (3) du véhicule automobile (1), par l'intermédiaire duquel, en fonction de l'information de position, un réglage s'effectuant, d'au moins un paramètre de fonctionnement d'au moins un système de véhicule (3), transmis par le terminal mobile (5), relatif à la zone se trouvant à l'intérieur du véhicule automobile, décrite par l'information de position, peut être traité,
**caractérisé en ce que**
le dispositif de détection de position (4) est configuré pour établir l'information de position à l'aide de données d'image enregistrées avec une caméra du terminal mobile (5), représentant l'intérieur ou une partie de l'intérieur du véhicule automobile (1), lesquelles permettent des conclusions quant à la position de l'occupant (I) et/ou du terminal mobile (5).

2. Véhicule automobile selon la revendication 1, **caractérisé en ce que** le dispositif de commande (6) est en outre configuré pour transmettre au moins une information de fonctionnement influençant au moins une fonction du terminal mobile (5) au terminal mobile (5) en fonction de l'information de position.

3. Véhicule automobile selon la revendication 1 ou 2, **caractérisé en ce que** le dispositif de détection de position (4) est configuré pour établir l'information de position à l'aide de signaux de mouvement spécifiques au terminal fournis pas un ensemble de capteurs de mouvement (7) appartenant au terminal mobile (5).

4. Véhicule automobile selon la revendication 3, **caractérisé en ce qu'**au moins un ensemble de capteurs de mouvement (8), du côté du véhicule automobile, fournissant des signaux de mouvement spécifiques au véhicule automobile, est prévu, dans lequel le dispositif de détection de position (4) est configuré pour établir l'information de position en tenant compte des signaux de mouvement spécifiques au véhicule automobile.

5. Véhicule automobile selon l'une des revendications précédentes, **caractérisé en ce que** le dispositif de détection de position (4) est configuré pour établir l'information de position à l'aide de l'accélération transversale agissant sur le terminal mobile (5), variant en fonction de la position à l'intérieur du véhicule automobile (1) lorsqu'une courbe est parcourue par celui-ci.

6. Véhicule automobile selon l'une des revendications 3 à 5, **caractérisé en ce que** l'ensemble de capteurs de mouvement (5, 8) du côté du terminal et/ou du côté du véhicule automobile comprend au moins un capteur inertiel.

7. Véhicule automobile selon l'une des revendications précédentes, **caractérisé en ce que** le dispositif de détection de position (4) est configuré pour établir l'information de position à l'aide d'une information de localisation fournie par au moins une antenne de localisation (10) prévue du côté du véhicule automobile pour localiser le terminal mobile (5).

8. Véhicule automobile selon l'une des revendications précédentes, **caractérisé en ce que** le dispositif de détection de position (4) est configuré pour établir l'information de position à l'aide d'une information d'enregistrement relative à un enregistrement du terminal mobile (5) avec le véhicule automobile (1), en particulier contenant une information de position.

9. Véhicule automobile selon l'une des revendications précédentes, **caractérisé en ce que**, dans son intérieur, au moins un marqueur (11) est disposé, lequel peut être détecté par le terminal mobile (5), dans lequel le terminal mobile (5), lors d'une détection du marqueur (11), est configuré pour générer une information de position additionnelle et pour transmettre celle-ci au dispositif de détection de position (4), lequel est configuré pour établir l'information de position à l'aide de l'information de position additionnelle transmise.

10. Véhicule automobile selon l'une des revendications précédentes, **caractérisé en ce que** le réglage du système de véhicule (3) concerne un système d'assistance du conducteur et/ou un système multimédia (3b) et/ou un système de climatisation (3a) et/ou un système d'éclairage intérieur et/ou un système d'actionnement d'au moins une porte et/ou d'une fenêtre et/ou un système pour régler une position assise.

11. Véhicule automobile selon l'une des revendications précédentes, **caractérisé en ce que** le réglage d'une fonction du terminal mobile (5) est une limitation de la réception de contenus d'information entrants, en particulier de communications téléphoniques, messages textuels et/ou multimédias entrants, et/ou une réduction des contenus représentés sur un moyen d'affichage du terminal mobile (5) et/ou une réduction de leur luminosité et/ou une extinction du moyen d'affichage et/ou une réduction de l'intensité sonore de signaux acoustiques du terminal mobile (5) et/ou une extinction de signaux acoustiques et/ou une réduction de l'intensité de signaux vibratoires du terminal mobile (5) et/ou une extinction de signaux vibratoires et/ou une extinction du terminal mobile (5).

12. Véhicule automobile selon la revendication 10 ou 11, **caractérisé en ce que** le réglage du paramètre de fonctionnement du système de véhicule (3) et/ou de la fonction du terminal mobile (5) est temporaire.

13. Véhicule automobile selon l'une des revendications précédentes, **caractérisé en ce qu'**il présente au moins un dispositif d'émission et/ou de réception formant en particulier une partie d'un réseau sans fil du côté du véhicule automobile, par l'intermédiaire duquel il est configuré pour communiquer avec le terminal mobile (5).

14. Véhicule automobile selon l'une des revendications précédentes, **caractérisé en ce que** le dispositif de commande (6), lors du réglage du au moins un paramètre de fonctionnement et/ou de la au moins une fonction du terminal mobile (5), est configuré pour prendre en compte au moins une information de fonctionnement actuelle du véhicule automobile (1) et/ou au moins une information de trafic actuelle.

15. Véhicule automobile selon l'une des revendications précédentes, **caractérisé en ce qu'**il comprend au moins un dispositif de détermination de plausibilité, lequel est configuré pour contrôler l'information de position établie par le dispositif de détection de position (4).
